# DEMANDE DE BREVET EUROPEEN

(11) **EP 2 422 864 A1**
(43) Date de publication de la demande: **29.02.2012**
(21) Numéro de dépôt: 11178708.1
(22) Date de dépôt: 24.08.2011
(51) Int. Cl.: B01D 29/35, B01D 35/027

(54) **Dispositif de filtration**

(30) Priorité: 25.08.2010 FR 1056749
(71) Demandeur: Maya Group, 35430 Chateauneuf D'ille Et Vilaine (FR)
(72) Inventeur: Juhere, Yannick, 35260 CANCALE (FR)
(74) Mandataire: Maillet, Alain

(57) **Abrégé**

La présente invention se rapporte à un dispositif de filtration (100) destiné à être raccordé à une fosse (F) pour filtrer les plus grosses particules d'un effluent qu'elle est susceptible de contenir, comprenant au moins un logement (210) de réception pour un élément filtrant (400) de type creux intérieurement. Selon l'invention, le dispositif incorpore au moins une buse (510) de nettoyage apte à être déplacée à l'intérieur dudit logement pour nettoyer l'élément filtrant.

## Description

La présente invention concerne un dispositif de filtration prévu pour être utilisé dans une fosse destinée à contenir un effluent et en particulier une fosse dite « toutes eaux », le dispositif étant pourvu d'un système de nettoyage pour le décolmater, le cas échéant, suivant une périodicité prescrite.

Rappelons qu'une fosse toutes eaux est une fosse septique pourvue d'un dispositif de filtration, encore appelé préfiltre, pour éviter qu'elle ne rejette des particules trop grossières, dans un système de filtration raccordé en aval de la fosse.

Le dispositif de filtration est installé dans une fosse toutes eaux, pour retenir dans celle-ci, lesdites particules en suspension afin de maintenir en bon état de fonctionnement le système de filtration en évitant son colmatage. Son utilisation est rendue obligatoire.

Une maintenance de ce dispositif de filtration est programmée une à deux fois par an. L'opérateur doit ainsi démonter l'élément filtrant qu'il contient pour le nettoyer. Pour cela, il ouvre le trou d'homme prévu sur la fosse, puis déconnecte le dispositif de filtration en le déboitant d'une conduite de sortie d'effluent traversant la fosse. Il démonte ensuite l'élément filtrant du dispositif et procède à son nettoyage, par exemple, à l'aide d'eau sous pression. Il le remonte à l'intérieur du dispositif et réinstalle celui-ci dans la fosse. Cette opération s'avère, on le constate, longue et salissante.

Le demandeur a recherché une solution plus rapide, moins salissante et tout aussi efficace pour nettoyer un tel préfiltre.

A cet effet, est proposé un dispositif de filtration destiné à être raccordé à une fosse pour filtrer les plus grosses particules d'un effluent qu'elle est susceptible de contenir, comprenant au moins un logement de réception pour un élément filtrant de type creux intérieurement ; selon l'invention, le dispositif incorpore une buse de nettoyage apte à être déplacée à l'intérieur dudit logement pour nettoyer l'élément filtrant.

En déplaçant la buse, on peut nettoyer l'élément filtrant sans qu'il soit nécessaire de le démonter. Le temps de maintenance est réduit et le travail est moins salissant qu'une opération de montage, nettoyage, remontage de l'élément filtrant, connue de l'art antérieur

Selon une caractéristique additionnelle de l'invention, le dispositif comprend un boîtier de sortie de l'effluent raccordé à une extrémité dudit ou de chaque logement, au moins une ouverture d'admission de l'effluent étant prévue au niveau de l'extrémité libre dudit ou de chaque logement, un orifice de sortie de l'effluent filtré qui traverse ledit boîtier.

Selon une caractéristique additionnelle de l'invention, la buse est raccordée à un tube d'amenée d'un fluide sous pression, sortant dudit boitier.

Le fluide sous pression peut alors être envoyé au travers des buses.

Selon une caractéristique additionnelle de l'invention, le dispositif comprend deux logements accolés de manière longitudinale, deux tubes réunis, par l'intermédiaire d'un collecteur externe, et dont la branche intermédiaire sert de poignée de manoeuvre pour déplacer les buses.

Le déplacement des buses de nettoyage des éléments filtrants est obtenu en manoeuvrant une poignée externe au dispositif.

Selon une caractéristique additionnelle de l'invention, le dispositif incorpore un moyen de manoeuvre à distance pour faciliter sa pose et son retrait de la fosse.

Le travail de pose et de retrait du dispositif est rendu moins fatiguant.

Selon une caractéristique additionnelle de l'invention, le moyen de manoeuvre est constitué d'un manche dont l'extrémité libre est destinée à être tenue de la main de l'opérateur qui installe le dispositif et dont l'autre extrémité est attelée à un tenon solidaire du boîtier.

Selon une caractéristique additionnelle de l'invention, le logement et le boîtier sont constitués de deux demi-coquilles réunies au niveau d'un plan de joint qui est sécant à un plan médian dudit ou de chaque logement.

Ces deux constituants principaux du dispositif sont faciles à fabriquer et le ou les éléments filtrants sont maintenus en place par enfermement entre ceux-ci.

Selon une caractéristique additionnelle de l'invention, des agrafes sont prévues au niveau du plan de joint des deux demi-coquilles pour les maintenir réunies.

Selon une caractéristique additionnelle de l'invention, l'élément filtrant est constitué d'une paroi périphérique perforée, ouverte à son extrémité destinée à être tournée vers les ouvertures et fermée de l'autre par une paroi de fermeture traversée cependant par un tube correspondant.

L'effluent pénètre à l'intérieur de l'élément filtrant et ressort, filtré, en passant au travers de sa paroi périphérique perforée.

Selon une caractéristique additionnelle de l'invention, l'élément filtrant est formé de deux parties réunies et dont le plan de joint commun est sécant à l'axe dudit élément filtrant.

Il peut de la sorte être fabriqué facilement par moulage.

Selon une caractéristique additionnelle de l'invention, l'élément filtrant est monté à coulissement dans son logement entre une position basse de filtration où son débouché est en contact avec une paroi de retour prévue au-dessus des ouvertures de chaque logement, obligeant l'effluent à filtrer, à traverser l'élément filtrant, et une position haute de nettoyage où il est mis en contact avec une butée située au débouché du logement dans le boîtier pour permettre l'évacuation au travers des ouvertures, des particules décollées à l'extérieur de l'élément filtrant.

Selon une caractéristique additionnelle de l'invention, l'élément filtrant peut être déplacé entre ces deux positions remarquables par l'intermédiaire de la buse.

En manoeuvrant la poignée de manoeuvre des buses, on peut également déplacer les éléments filtrants dans leurs deux positions remarquables.

Selon une caractéristique additionnelle de l'invention, un redan prévu le long de la paroi intérieure de chaque logement coopère avec une portion élastique réalisée longitudinalement sur l'élément filtrant correspondant pour le maintenir dans sa position haute.

Etant maintenu dans sa position haute de nettoyage, les particules décollées de l'élément de filtration sont évacuées en dehors du dispositif, pendant qu'il le nettoie.

Selon une caractéristique additionnelle de l'invention, la buse comprend une ogive perforée en périphérie et qui est raccordée à un tube correspondant, des doigts prévus pour centrer et guider ladite buse pendant son coulissement à l'intérieur de l'élément filtrant.

La buse est alors positionnée et guidée correctement dans l'élément filtrant.

Selon une caractéristique additionnelle de l'invention, l'extrémité de l'ogive est protégée, dans une position basse de parcage de la buse, dans un puits prévu dans une paroi de fond fermant l'extrémité libre dudit ou de chaque logement.

Hors période d'usage, les fines perforations de la buse demeurent ainsi protégées de l'obturation.

Selon une caractéristique additionnelle de l'invention, le dispositif incorpore un verrou apte à bloquer la poignée de manoeuvre dans la position basse protégée de la buse et/ou dans la position basse de filtration de l'élément filtrant.

On est alors certain que le dispositif est configuré pour filtrer l'effluent.

Selon une caractéristique additionnelle de l'invention, un volet pourvu d'au moins un flotteur est monté de manière articulée entre deux joues d'encadrement de l'orifice de sortie pour former une rehausse du niveau de sortie de l'effluent.

Selon une caractéristique additionnelle de l'invention, le dispositif incorpore un moyen d'avertissement de la position basse et/ou de la position haute de l'élément filtrant.

L'utilisateur peut ainsi contrôler la position de la buse et la position de l'élément filtrant.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue locale en coupe d'un dispositif de filtration installé dans une fosse selon l'invention,
la Fig. 2 représente une vue en perspective d'un dispositif de filtration selon l'invention,
la Fig. 3a représente une vue en perspective d'un élément filtrant pour un dispositif de filtration selon l'invention,
la Fig. 3b représente une vue de dessus d'un élément filtrant pour un dispositif de filtration selon l'invention,
la Fig. 3c représente une vue d'un détail d'un trou calibré de filtration d'un élément filtrant pour un dispositif de filtration selon l'invention,
la Fig. 4a représente une vue de face d'un dispositif de filtration incorporant un moyen de nettoyage de ses éléments filtrants selon l'invention,
la Fig. 4b représente une vue en coupe d'un logement et d'un élément filtrant d'un dispositif de filtration selon l'invention,
la Fig. 5 représente une vue latérale en coupe d'un dispositif de filtration montant une buse de nettoyage dans ses deux positions extrêmes selon l'invention,
la Fig. 6 représente une vue en perspective d'une variante de réalisation d'un dispositif de filtration incorporant un moyen de blocage d'un moyen de nettoyage de ses éléments filtrants selon l'invention,
la Fig. 7a représente une vue latérale d'un moyen de blocage en position verrouillée d'un moyen de nettoyage des éléments filtrants du dispositif de filtration selon l'invention et,
la Fig. 7b, représente une vue latérale d'un moyen de blocage en position déverrouillée d'un moyen de nettoyage des éléments filtrants du dispositif de filtration selon invention.

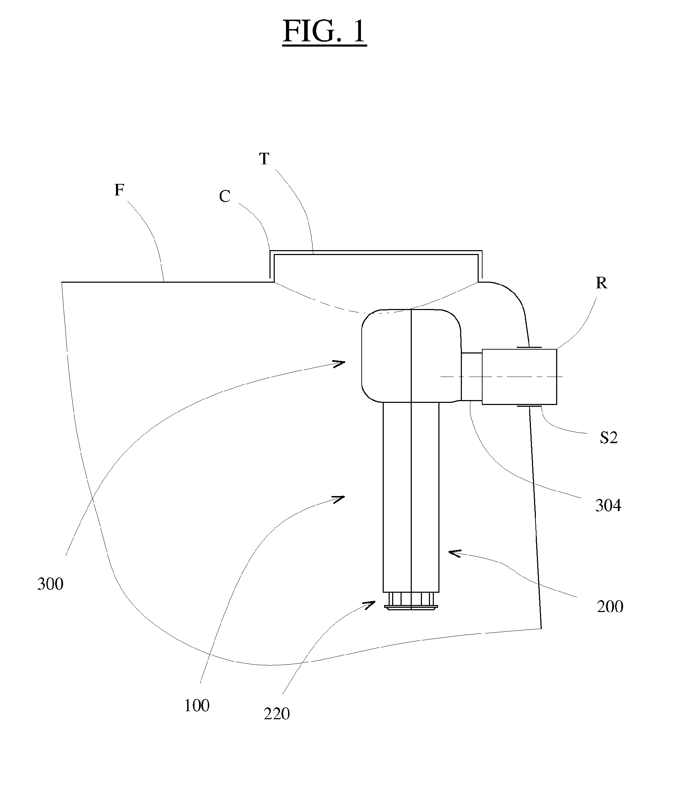

La fosse F présentée sur la Fig. 1 est une fosse dite « toutes eaux » destinée à recueillir les eaux usées domestiques d'un habitat pour les décanter afin que l'effluent qu'elle contient puisse ensuite être évacué vers un système de filtration.

Selon la norme XP DTU 64.1, un dispositif de filtration doit être installé dans une fosse ou immédiatement en aval de celle-ci pour qu'il puisse retenir les particules solides les plus grossières susceptibles d'échapper de la fosse pour éviter le risque de colmatage du système de filtration afin que celui-ci puisse fonctionner de façon optimale. Cette norme prescrit encore que le dispositif de filtration doit être accessible pour pouvoir être retiré afin de procéder à son entretien. Ce dispositif de filtration est encore appelé préfiltre dans la profession.

La fosse F comporte un orifice d'entrée des eaux usées, non visible sur cette vue partielle, ainsi qu'un orifice de sortie S2 de l'effluent prétraité, et qui est traversé par une conduite de raccordement R vers le système de filtration.

Un trou d'homme T, refermé normalement par un couvercle C, traverse l'enveloppe de la fosse F de manière à permettre, notamment, un accès vers le dispositif de filtration 100.

Un dispositif de filtration 100 répondant à cette prescription est installé dans la fosse F présentée sur la Fig. 1.

Il se compose d'un corps 200 de réception d'au moins un élément filtrant dans lequel l'effluent à filtrer peut être admis pour y être filtré et qui débouche dans un boîtier de sortie 300 destiné à être raccordé à l'orifice de sortie S2 de la fosse F, pour rejeter hors de celle-ci, l'effluent filtré.

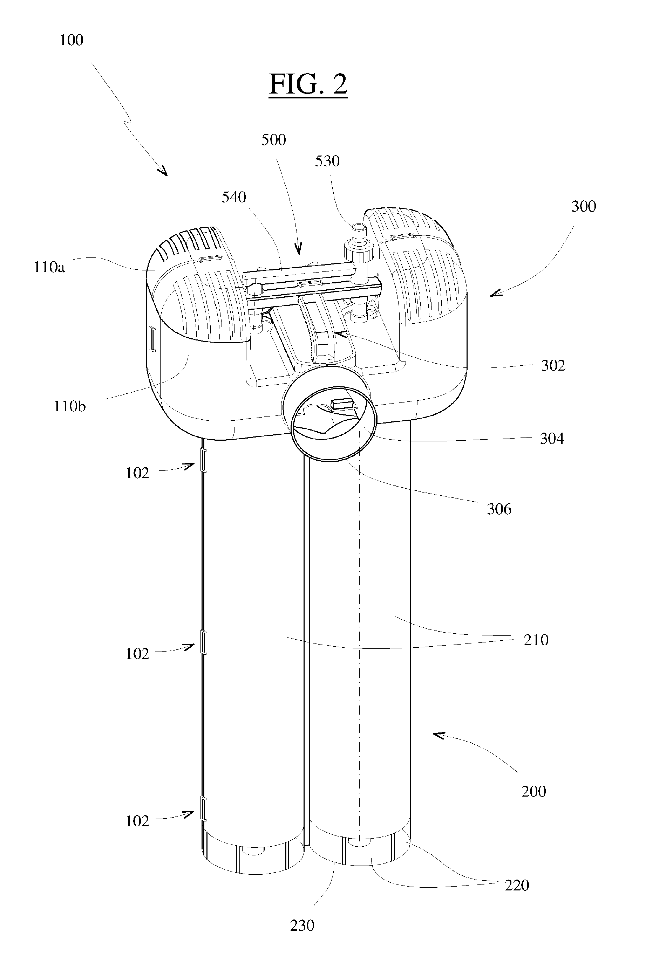

Le corps 200 est constitué, sur la Fig. 2, de deux logements cylindriques 210 accolés de manière longitudinale et dans lesquels peuvent prendre place respectivement deux éléments filtrants de l'effluent. Ils sont raccordés par une de leur extrémité au boîtier de sortie 300. Une paroi de fond 230 ferme cette extrémité libre. Des ouvertures 220 périphériques d'admission de l'effluent traversent les logements 210, en amont de cette paroi de fond.

Des pieds placés sous les deux parois de fond permettent de poser de manière stable et verticale le dispositif de filtration sur une surface horizontale.

La présence de deux logements 210 procure une meilleure tenue à l'obstruction du dispositif, car si les ouvertures d'entrée d'un logement sont bouchées par un corps étranger non dégradé (film plastique par exemple), l'entrée de l'autre logement, qui demeure dégagée, autorise son fonctionnement quasi normal. Dans un mode de réalisation, non représenté, le dispositif de filtration ne comprend cependant qu'un seul logement pour abaisser son coût de fabrication.

Le boîtier de sortie 300 est destiné à recueillir l'effluent traité pour le canaliser vers l'orifice de sortie de la fosse. Il se présente sous une forme globalement parallélépipédique, et la paroi supérieure qui le constitue est creusée d'un renfoncement lui donnant, en vue de face, la forme d'un U. Une poignée de manoeuvre 302 du dispositif est disposée dans ce renfoncement pour le manoeuvrer et permettre, en particulier, son montage dans la fosse et son démontage. Les deux logements débouchent dans le boîtier 300 au travers de sa paroi de fond. Un orifice de sortie 304 débouche au travers d'une de ses parois latérales. Il est prolongé d'un manchon de raccordement 306 d'un diamètre compatible avec celui de la conduite de raccordement de la fosse.

On remarquera qu'un connecteur de raccordement, objet de la demande de brevet n° 09/51375 du demandeur pourrait être interposé entre le dispositif de filtration et la conduite de raccordement de la fosse pour faciliter le démontage et le remontage du dispositif de filtration, tout en évitant le rejet de particules grossières à l'extérieur de la fosse, alors que le dispositif de filtration est démonté.

Il faut encore remarquer que le dispositif de filtration pourrait être placé à l'extérieur de la fosse. L'orifice de sortie de celle-ci serait alors raccordé au corps du dispositif de manière à ce que le fluide puisse pénétrer dans celui-ci.

Le corps de réception 200 et le boîtier de sortie 300 sont de préférence constitués de deux demi-coquilles 110a et 110b réunies au niveau d'un plan de joint commun qui est sécant au plan médian des deux logements 210. Cette construction facilite la fabrication par moulage de ces constituants et autorise un montage par enfermement entre ces deux parties des éléments filtrants dans leurs logements respectifs.

Des agrafes 102, comprenant respectivement des ergots encliquetés dans des encoches, sont prévues à intervalles réguliers au niveau du plan de joint des deux demi-coquilles 110 pour les maintenir réunies. La séparation de ces deux constituants est cependant possible pour remplacer, le cas échéant, les éléments filtrants.

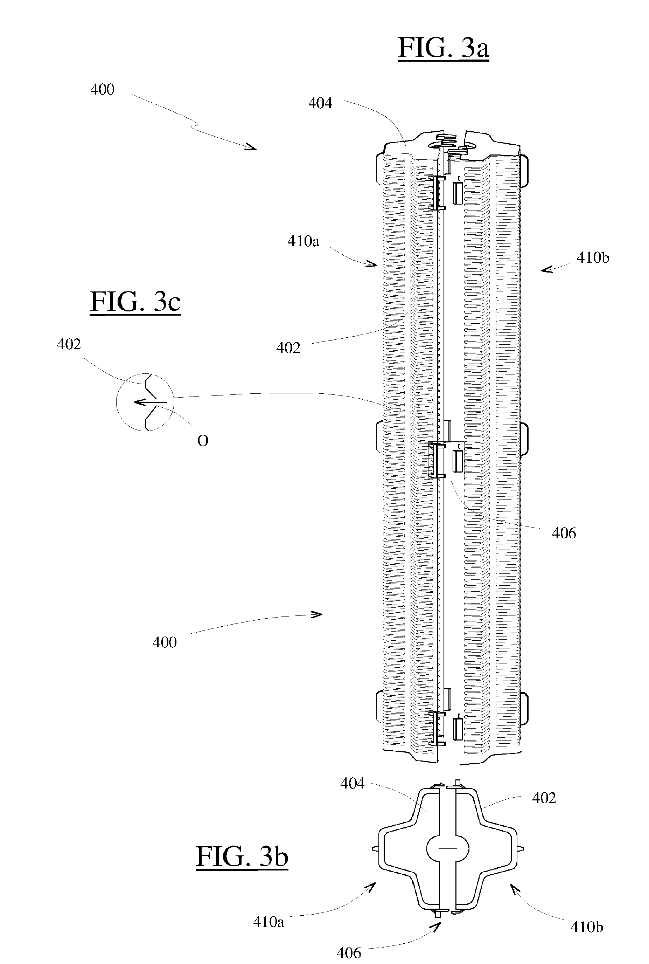

L'élément filtrant 400 présenté sur la Fig. 3a est destiné à retenir les plus grosses particules contenues dans l'effluent et qui pénètrent dans le dispositif de filtration. Il est constitué d'une cartouche comprenant une paroi périphérique 402 ouverte à une extrémité et fermée de l'autre par une paroi haute de fermeture 404. La paroi périphérique 402 est perforée d'une pluralité de trous O d'une dimension calibrée. Chaque trou présente, de préférence, une forme oblongue apte à retarder son obstruction tout en conservant une capacité de filtration élevée. L'extrémité ouverte de l'élément filtrant, visible en partie basse sur cette Fig. 3a est destinée à être tournée en direction des ouvertures d'admission de l'effluent à l'issue de son montage dans le dispositif. L'élément filtrant 400 présente en section une forme en croix, visible sur la Fig. 3b, offrant ainsi une plus grande surface de filtration.

Dans la vue en détail sur la Fig. 3c, d'un trou O de filtration, la paroi périphérique 402 au débouché de celui-ci présente une forme conique dont l'angle est obtus pour accélérer, par un effet venturi, la vitesse de sortie de l'effluent.

L'élément filtrant 400 est avantageusement constitué de deux parties 410a, 410b, réunies au niveau d'un plan de joint commun qui est sécant à l'axe de la cartouche lorsqu'ils sont assemblés. Ces deux parties sont de préférence des constituants identiques. Des agrafes 406, comprenant respectivement des ergots encliquetés dans des encoches, sont prévues à intervalles réguliers au niveau du plan de joint des deux constituants pour les maintenir assemblés. Sur les Figs. 3a et 3b, les deux parties sont présentées démontées, l'une en face de l'autre.

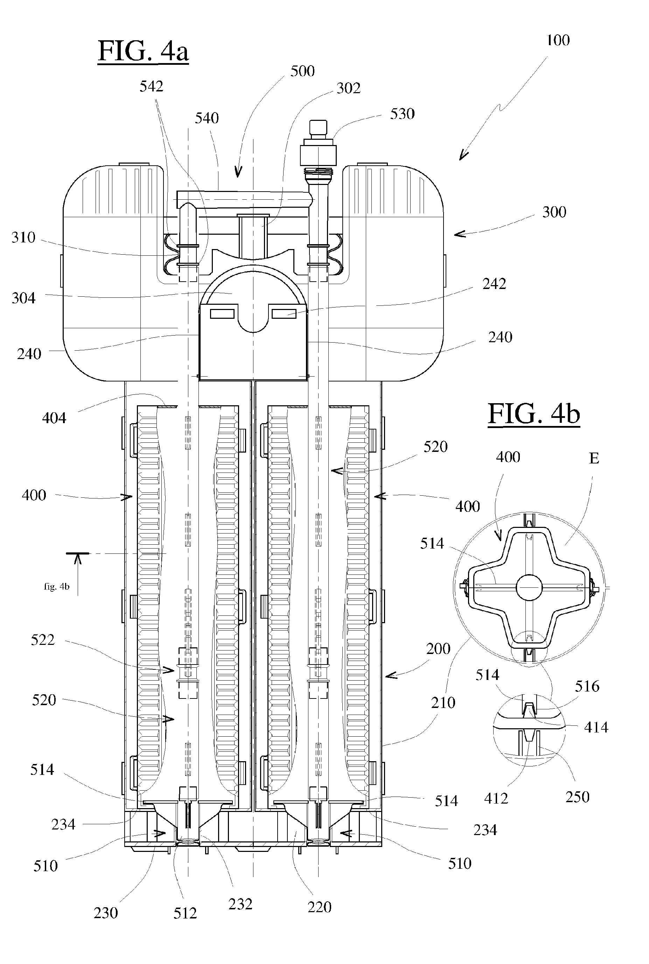

Sur la Fig. 4b, un espace E est dévolu entre le logement 210 et l'élément filtrant correspondant 400 pour que le fluide filtré puisse s'écouler dans la boîte de sortie et être évacué en dehors de la fosse au travers de son orifice de sortie.

Sur la Fig. 4a, le dispositif de filtration 100 est pourvu d'un moyen de nettoyage 500 de ses éléments filtrants 400 lorsqu'ils demeurent en place, c'est-à-dire lorsqu'ils sont enfermés dans leurs logements respectifs. Le nettoyage peut être ainsi réalisé rapidement sans qu'il soit nécessaire de démonter les éléments filtrants.

Il est prévu pour envoyer à l'intérieur de chaque élément filtrant, un jet d'un fluide sous pression, tel que de l'eau, sur quasiment toute sa hauteur afin de déboucher les trous de filtration obstrués pour décolmater ledit élément filtrant.

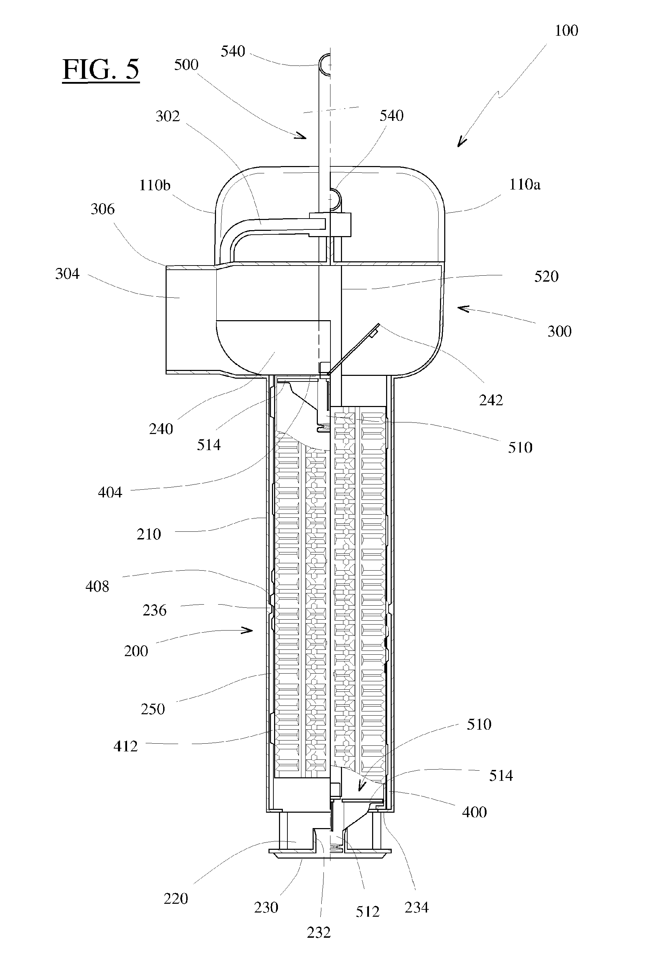

Il se compose a minima d'une buse de nettoyage 510 raccordée à un tube 520 d'amenée du fluide sous pression et de son raccord 530. Ce tube d'amenée peut coulisser au travers de la paroi supérieure du boîtier 300 et de la paroi haute 404 de fermeture de l'élément filtrant 400, traversée à cet effet d'un trou de passage. La buse est disposée à l'intérieur de chaque logement de manière à ce qu'elle puisse coulisser à l'intérieur d'un élément filtrant correspondant sur quasiment toute sa hauteur, entre une position basse de parcage et une position haute, pour le nettoyer, et qui sont visibles sur la Fig. 5, respectivement sur la demie-vue de droite et sur la demie-vue de gauche.

Sur la Fig. 4a, deux éléments filtrants sont montés respectivement dans les deux logements et les deux tubes correspondants, qui sont raccordés par une extrémité aux deux buses, sont raccordés à leur autre extrémité à un collecteur 540 externe sur lequel est monté le raccord 530. Ce collecteur présente sur cette Fig. 4a, la forme d'un U retourné permettant ainsi que sa branche intermédiaire puisse servir de poignée de manoeuvre du moyen de nettoyage 500 pour faire coulisser les buses à l'intérieur des filtres.

La buse 510 est constituée d'une ogive 512 fermée à une extrémité et emmanchée de son autre extrémité dans un tube 520 correspondant, et de doigts 514 destinés au centrage et au guidage de celle-ci pendant son coulissement à l'intérieur de l'élément filtrant 400.

L'extrémité libre et fermée de l'ogive 512 est percée à sa périphérie d'au moins une rangée de perforations aptes à projeter à l'intérieur de l'élément filtrant de l'eau sous pression. Cette extrémité de l'ogive est protégée dans un puits cylindrique 232 prévu dans la paroi de fond 230 de chaque logement 210 et ceci dans la position basse de la buse 510.

On remarquera que les extrémités des doigts forment une butée dans la position basse de la buse en coopérant avec une paroi de retour prévue dans l'extrémité basse de l'élément filtrant 400.

Sur la Fig. 5, chaque élément filtrant 400 possède la faculté de coulisser dans son logement correspondant entre une position basse de filtration visible sur la demi-vue de droite et une position haute de nettoyage, visible sur la demi-vue de gauche. Dans sa position basse, l'élément filtrant est en butée sur une paroi de retour 234 prévue au-dessus des ouvertures 220 de chaque logement 210 obligeant l'effluent, à traverser l'élément filtrant 400 pour être filtré. Dans sa position haute, l'élément filtrant est en contact avec une butée 240 située au débouché du logement 210 dans le boîtier 300 pour permettre l'évacuation au travers des ouvertures 220, des particules décollées à l'extérieur de l'élément filtrant. Cette butée est ici constituée d'une joue d'encadrement 240 de l'orifice de sortie 304 du boîtier 300. Le déplacement de l'élément filtrant entre ses deux positions extrêmes est mis en oeuvre par le déplacement de la buse 510, vers la fin de son excursion, lorsque l'on tire sur la poignée de manoeuvre 540 ou lorsqu'on la repousse. La position haute de l'élément filtrant peut être maintenue grâce à un redan 236 prévu le long de la paroi intérieure de chaque logement, agissant sur une portion élastique 408 réalisée longitudinalement sur l'élément filtrant correspondant. Lorsque les éléments filtrants sont maintenus dans leur position haute, l'opérateur peut alors faire coulisser à l'intérieur de ceux-ci, en un mouvement alternatif, les buses 510 en manoeuvrant la poignée 540, pour les nettoyer.

Au moins une glissière 250 est prévue longitudinalement dans chaque logement 210 pour, en coopération avec au moins un tenon 412 correspondant prévu sur la paroi extérieure de l'élément filtrant, le guider sans faculté de pouvoir tourner pendant son coulissement. Ce moyen de guidage est également visible sur la vue en détail agrandie de la Fig. 4b. Une construction similaire existe entre la buse de nettoyage 510 et l'élément filtrant 400 pour que cette dernière coulisse longitudinalement dans l'élément filtrant sans faculté de tourner. Des encoches 516, visibles sur la Fig. 4b, sont ainsi prévues aux extrémités des doigts 514 pour coopérer respectivement avec des rails 414 réalisés longitudinalement dans l'élément filtrant 400.

Sur les Figs. 4 et 5, un volet 242 pourvu d'au moins un flotteur est monté de manière articulée entre les deux joues 240 d'encadrement de l'orifice de sortie 304 pour réduire le débit sortant de la fosse, lorsque le niveau de l'effluent dépasse le niveau haut des éléments filtrants. Lorsque le niveau de l'effluent s'élève de la sorte, il soulève le flotteur qui ramène à la verticale le volet. Les deux joues 240 et le volet forment alors une rehausse encadrant l'orifice de sortie 304 pour limiter le débit de sortie de la fosse, d'un effluent non filtré susceptible de s'introduire dans le boîtier de sortie 300 du dispositif de filtration.

Le dispositif 100 incorpore un moyen d'avertissement indiquant à l'opérateur, alors qu'il déplace les buses, que les éléments filtrants sont dans leur position de nettoyage ou dans leur position de repos. Sur la Fig. 4a, ce moyen prend la forme d'un manchon 522 qui est interposé sur chaque tube 520 à une hauteur particulière pour venir, en coopération avec des parois élastiques 310 prévues dans le renfoncement du boîtier 300, avertir l'opérateur que les buses 510 sont disposées en position haute, et pour être plus précis, lorsque les buses ont déplacé les éléments filtrants dans leur position de nettoyage. Ce manchon 522 incorpore une partie centrale disposée entre deux bourrelets pour que cette partie centrale puisse être légèrement retenue par les parois élastiques 310 en émettant un bruit caractéristique. Dans le même but, des anneaux 542 ceinturent à une hauteur particulière les branches parallèles du collecteur pour coopérer avec les parois élastiques 310 pour avertir l'opérateur que les buses ont atteint leur position basse de parcage.

Le fonctionnement du dispositif de filtration va maintenant être décrit. On introduit deux éléments filtrants 400 dans leurs emplacements dévolus dans une demi-coquille 110. On place ensuite le moyen de nettoyage 500 de telle sorte que les buses 510 soient placées à l'intérieur des éléments filtrants 400 et l'on assemble mutuellement ensuite les deux demi-coquilles 110, par clippage de leurs agrafes 102. On introduit le dispositif de filtration dans la fosse en le raccordant à son orifice de sortie. On vérifie que les éléments filtrants sont placés dans leur position basse de filtration et que les buses sont protégées dans leur puits.

Lorsque la fosse se remplit, l'effluent pénètre dans le dispositif 100 au travers des ouvertures 220, puis traverse de l'intérieur vers l'extérieur les éléments filtrants 400 qui retiennent alors les plus grosses particules. L'effluent filtré pénètre dans le boîtier, puis quitte la fosse au travers de son orifice de sortie, vers un système de filtration annexe. Les particules retenues dans les éléments filtrants retombent par gravité dans la fosse en traversant les ouvertures 220, en particulier en l'absence d'écoulement entrant dans la fosse.

Lorsqu'il convient de procéder au nettoyage des éléments filtrants, l'opérateur, après avoir retiré le couvercle de la fosse, raccorde un tuyau d'amenée d'eau sous pression au raccord 530. Il tire à fond la poignée 540 du collecteur, si bien que les buses font remonter les éléments filtrants dans leur position haute de nettoyage. Il repousse et remonte à plusieurs reprises la poignée 540 si bien que les buses 510 projettent de l'eau sous pression à l'intérieur des éléments filtrants sur toute leur hauteur. Les trous O des éléments filtrants sont débouchés et les particules rejetées à l'extérieur des éléments filtrants s'échappent au travers des ouvertures 220. A la fin du nettoyage, l'opérateur abaisse au maximum la poignée 540 pour placer les buses dans leur puits de protection 232. Il déconnecte le tuyau d'amenée d'eau et referme le couvercle de la fosse.

Le dispositif de filtration de l'invention simplifie les opérations courantes de nettoyage de ses éléments filtrants. Un gain de temps appréciable a été obtenu se rapportant à ses opérations de maintenance qui sont, par ailleurs, moins contraignantes à mettre en oeuvre.

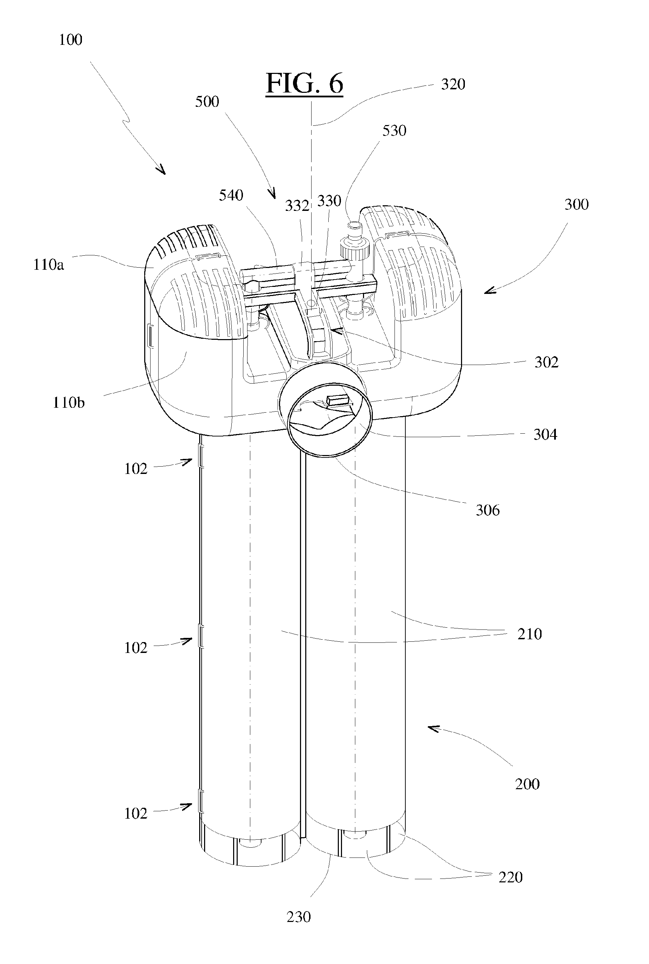

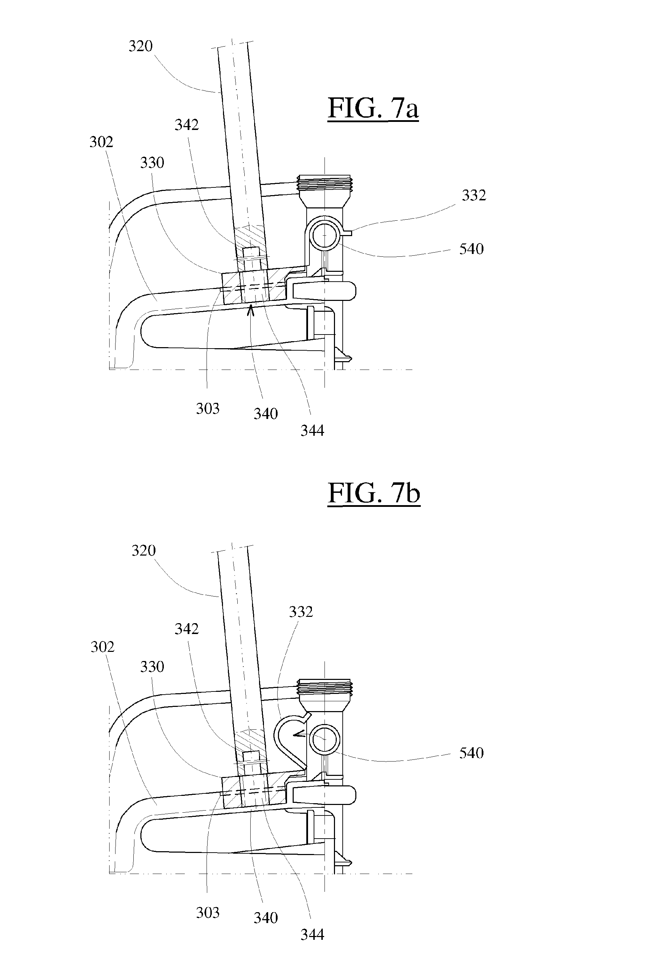

Dans une variante de construction représentée sur les Figs. 6 et 7, le dispositif de filtration 100 incorpore un moyen de manoeuvre à distance pour faciliter sa pose et son retrait de la fosse. Il est constitué d'un manche 320 dont l'extrémité libre est destinée à être tenue de la main de l'opérateur qui installe le dispositif et dont l'autre extrémité est prévue pour être attelée à un tenon 330 solidaire du boîtier 300 et plus précisément de la poignée 302. Il est retenu par l'intermédiaire d'un moyen de guidage en translation, tel qu'une paire de glissières 303 réalisées dans la poignée 302, pour faciliter son montage. Une douille 340 est montée sur l'extrémité du manche destinée à être attelée pour connecter ou déconnecter celui-ci du dispositif.

La douille 340 se compose, sur les Figs. 7, d'un embout 342 de fixation sur ladite extrémité du manche, et d'un moyen de connexion 344 sur le dispositif. Un perçage est réalisé dans ladite extrémité du manche pour réceptionner l'embout 342 et une goupille montée radialement l'immobilise sur le manche. Le moyen de connexion 344 est constitué, sur ces Figs. 7, d'un filetage apte à coopérer avec un trou taraudé réalisé dans le tenon. Le moyen de connexion peut encore prendre la forme d'un mécanisme à baïonnette.

Sur les Figs. 7, le tenon 330 est retenu dans la poignée 302, à proximité de la branche intermédiaire du collecteur 540 formant poignée de manoeuvre du moyen de nettoyage. Le tenon 330 est prolongé par une paroi 332 en forme de crochet, et qui est articulée sur le tenon, formant de la sorte un verrou apte à chevaucher cette poignée de manoeuvre pour, d'une part, maintenir les buses dans leur position basse protégée et, d'autre part, maintenir également les éléments de filtration dans leur position basse de filtration. Sur la Fig. 7a, le verrou 332 est placé dans une position de blocage de la poignée de manoeuvre en position basse. Sur la Fig. 7b, le verrou 332 a été manoeuvré dans une position de déblocage de la poignée de manoeuvre du moyen de nettoyage pour en permettre son utilisation. Un ergot prolonge ce verrou pour faciliter sa manoeuvre. On remarquera que le verrou pourrait être, dans un mode de réalisation non représenté, un composant distinct du tenon.

## Revendications

1. Dispositif de filtration (100) destiné à être raccordé à une fosse (F) pour filtrer les plus grosses particules d'un effluent qu'elle est susceptible de contenir, comprenant au moins un logement (210) de réception pour un élément filtrant (400) de type creux intérieurement, le dispositif incorporant une buse (510) de nettoyage apte à être déplacée à l'intérieur dudit logement pour nettoyer l'élément filtrant, le dispositif comprenant un boîtier (300) de sortie de l'effluent raccordé à une extrémité dudit ou de chaque logement (210), au moins une ouverture (220) d'admission de l' effluent étant prévue au niveau de l'extrémité libre dudit ou de chaque logement, un orifice de sortie (304) de l'effluent filtré traversant ledit boîtier, **caractérisé en ce que** l'élément filtrant (400) est monté à coulissement dans son logement (210) entre une position basse de filtration, et une position haute de nettoyage.

2. Dispositif de filtration (100) selon la revendication 1, **caractérisé en ce que** la buse (510) est raccordée à un tube (520) d'amenée d'un fluide sous pression, sortant dudit boîtier.

3. Dispositif de filtration (100) selon la revendication 1 ou 2, **caractérisé en ce qu'**il comprend deux logements (210) accolés de manière longitudinale, deux tubes (520) réunis, par l'intermédiaire d'un collecteur (540) externe, et dont la branche intermédiaire sert de poignée de manoeuvre pour déplacer les buses (510).

4. Dispositif de filtration (100) selon l'une quelconque des revendications précédentes, **caractérisé en ce qu'**il incorpore un moyen de manoeuvre à distance pour faciliter sa pose et son retrait de la fosse (F).

5. Dispositif de filtration (100) selon la revendication 4, **caractérisé en ce que** le moyen de manoeuvre à distance est constitué d'un manche (320) dont l'extrémité libre est destinée à être tenue de la main de l'opérateur qui installe le dispositif et dont l'autre extrémité est attelée à un tenon (330) solidaire du boîtier (300).

6. Dispositif de filtration (100) selon l'une quelconque des revendications précédentes, **caractérisé en ce que** le logement (210) et le boîtier (300) sont constitués de deux demi-coquilles (110a, 110b) réunies au niveau d'un plan de joint qui est sécant à un plan médian dudit ou de chaque logement (210).

7. Dispositif de filtration (100) selon la revendication 6, **caractérisé en ce que** des agrafes (102) sont prévues au niveau du plan de joint des deux demi-coquilles (110a, 110b) pour les maintenir réunies.

8. Dispositif de filtration (100) selon l'une quelconque des revendications 2 à 7, **caractérisé en ce que** l'élément filtrant (400) est constitué d'une paroi périphérique (402) perforée, ouverte à son extrémité destinée à être tournée vers les ouvertures (220) et fermée de l'autre par une paroi de fermeture (404) traversée cependant par un tube (520) correspondant.

9. Dispositif de filtration (100) selon l'une quelconque des revendications précédentes, **caractérisé en ce que** l'élément filtrant (400) est formé de deux parties (410a, 410b) réunies et dont le plan de joint commun est sécant à l'axe dudit élément filtrant.

10. Dispositif de filtration (100) selon l'une quelconque des revendications précédentes, **caractérisé en ce que** dans la position basse de filtration de l'élément filtrant (400), son débouché est mis en contact avec une paroi de retour (234) prévue au-dessus des ouvertures (220) de chaque logement (210), obligeant l'effluent à filtrer, à traverser l'élément filtrant (400), et dans sa position haute de nettoyage, il est mis en contact avec une butée (240) située au débouché du logement (210) dans le boîtier (300) pour permettre l'évacuation au travers des ouvertures (220), des particules décollées à l'extérieur de l'élément filtrant.

11. Dispositif de filtration (100) selon l'une quelconque des revendications précédentes, **caractérisé en ce que** l'élément filtrant (400) peut être déplacé entre ses deux positions remarquables par l'intermédiaire de la buse (510).

12. Dispositif de filtration (100) selon la revendication 11, **caractérisé en ce qu'**un redan (236) prévu le long de la paroi intérieure de chaque logement (210), coopère avec une portion élastique (408) réalisée longitudinalement sur l'élément filtrant (400) correspondant pour le maintenir dans sa position haute.

13. Dispositif de filtration (100) selon l'une quelconque des revendications précédentes, **caractérisé en ce que** la buse (510) comprend une ogive (512) perforée en périphérie et qui est raccordée à un tube (520) correspondant, des doigts (514) prévus pour centrer et guider ladite buse pendant son coulissement à l'intérieur de l'élément filtrant (400).

14. Dispositif de filtration (100) selon la revendication 13, **caractérisé en ce que** l'extrémité de l'ogive est protégée, dans une position basse de parcage de la buse (510), dans un puits (232) prévu dans une paroi de fond (230) fermant l'extrémité libre dudit ou de chaque logement (210).

15. Dispositif de filtration (100) selon la revendication 3 à 14, **caractérisé en ce qu'**il incorpore un verrou (332) apte à bloquer la poignée de manoeuvre dans la position basse protégée de la buse (510) et/ou dans la position basse de filtration de l'élément filtrant.

16. Dispositif de filtration (100) selon l'une quelconque des revendications précédentes, **caractérisé en ce qu'**un volet (242) pourvu d'au moins un flotteur est monté de manière articulée entre deux joues (240) d'encadrement de l'orifice de sortie (304) pour former une rehausse du niveau de sortie de l'effluent.

17. Dispositif de filtration (100) selon l'une quelconque des revendications précédentes, **caractérisé en ce qu'**il incorpore un moyen d'avertissement (522, 542) de la position basse et/ou de la position haute de l'élément filtrant (400).
